# FASCICULE DE BREVET EUROPEEN

(11) **EP 1 319 147 B1**
(45) Date de publication et mention de la délivrance du brevet: **30.08.2006**
(21) Numéro de dépôt: 01955434.4
(22) Date de dépôt: 17.07.2001
(51) Int. Cl.: F16L 21/08

(54) **RACCORD DE LIAISON D'UN L MENT DE TUYAUTERIE TUBULAIRE AVEC UNE CONDUITE**
ANSCHLUSSVERBINDUNG ZWISCHEN EINEM ROHRFÖRMIGEN ELEMENT UND EINEM ROHR
COUPLING FOR CONNECTING A TUBULAR FITTING TO A PIPE

(30) Priorité: 25.08.2000 FR 0010964
(43) Date de publication de la demande: 18.06.2003
(73) Titulaire: SAINT-GOBAIN PAM, 54000 Nancy (FR)
(72) Inventeur: VITEL, Jean-Pierre, F-54470 Thiaucourt-Regnieville (FR); FAVIER, Noel, F-54380 Dieulouard (FR); LESCOT, Didier, F-54200 Toul (FR); RENARD, Philippe, F-54710 Fleville (FR)
(74) Mandataire: Jacobson, Claude
(86) Numéro de dépôt international: PCT/FR2001/002326
(87) Numéro de publication internationale: WO 2002/016815

(56) Documents cités:
- EP-A- 0 899 495
- US-A- 5 022 687
- US-A- 5 833 277
- US-A- 6 062 611

## Description

La présente invention concerne un raccord de liaison d'un élément de tuyauterie tubulaire avec une conduite en matière plastique engagée dans l'élément de tuyauterie, du type comportant :
- une garniture périphérique de verrouillage de la conduite, laquelle garniture est adaptée pour ceinturer la conduite et est élastiquement déformable radialement depuis un état de repos où elle présente un diamètre intérieur nominal,
- une bague externe de serrage rapportée à l'extrémité de l'élément dé tuyauterie et entourant la garniture périphérique, et
- des moyens de sollicitation axiale de la bague de serrage vers l'élément de tuyauterie, les surfaces en regard de la bague de serrage et de la garniture présentant des surfaces de came associées, adaptées pour assurer une compression centripète de la garniture sur la conduite lors d'une sollicitation axiale de la bague de serrage vers l'élément de tuyauterie.

Les éléments de tuyauterie en question peuvent être des tuyaux de canalisation, des éléments de jonction munis d'une bride, mais également des accessoires de canalisation, tels que des éléments de robinetterie.

Un tel raccord est destiné notamment à la liaison d'un élément de tuyauterie tubulaire réalisé en fonte, ou en tout autre matériau métallique, avec une conduite à surface extérieure lisse, et plus particulièrement une conduite réalisée en matière plastique, tel que du poly (chlorure de vinyle), du polyéthylène ou du polypropylène ou tout autre matériau.

Un tel raccord de liaison permet, en plus d'assurer l'étanchéité, un verrouillage axial de la conduite par rapport à l'élément de tuyauterie tubulaire, c'est-à-dire une immobilisation axiale des deux éléments l'un par rapport à l'autre.

Ce verrouillage est assuré par une pression centripète appliquée sur la garniture périphérique lors de la sollicitation axiale de la bague externe de serrage.

Un tel raccord est décrit par exemple dans le document DE 30 02 205. Dans ce document, la garniture périphérique est formée d'une bague élastique fendue recouverte sur sa surface intérieure de particules d'accrochage dures. Cette bague est, avant montage, engagée autour de la conduite, le long de laquelle elle est maintenue par son élasticité propre plaquant la surface intérieure de la garniture contre la surface externe de la conduite. Pour assurer le verrouillage proprement dit, une bague externe de serrage est vissée sur l'élément de tuyauterie tubulaire.

Avec un raccord tel que décrit dans ce document, il convient de positionner correctement la garniture de verrouillage sur la conduite avant que celle-ci ne soit engagée dans l'élément de tuyauterie. Ce positionnement doit s'effectuer à l'endroit d'implantation finale de la garniture sur la conduite. Ce positionnement est relativement délicat à réaliser puisqu'il est difficile de prévoir, avant mise en place de la conduite dans l'élément de tuyauterie, l'emplacement exact de la conduite dans cet élément de tuyauterie.

L'invention a pour but de proposer un raccord de liaison permettant de raccorder une conduite et un élément dé tuyauterie tubulaire avec une grande latitude dans leur positionnement relatif axial.

A cet effet, l'invention a pour objet un raccord de liaison suivant la revendication 1.

Suivant des modes particuliers de réalisation, le raccord comporte selon la revendications ou plusieurs des caractéristiques suivantes :
- la garniture présente au moins une interruption suivant sa circonférence, et lesdits moyens de maintien comportent une cale d'écartement amovible disposée initialement dans l'interruption, laquelle cale d'écartement comporte un prolongement de préhension accessible depuis l'extérieur de la bague de serrage ;
- la garniture comporte suivant sa circonférence au moins deux mors courbes et rigides et un moyen de rappel élastique des deux mors sollicitant ceux-ci de manière centripête ;
- la bague de serrage comporte sur sa surface intérieure une encoche de passage du prolongement de préhension de ladite cale ;
- les moyens élastiques de sollicitation comportent une rondelle au moins partiellement expansible axialement ;
- la bague de serrage comporte une gorge intérieure de réception du bord extérieur de ladite rondelle au moins partiellement expansible axialement ;
- l'élément de tuyauterie comporte une gorge périphérique interne et une garniture d'étanchéité disposée dans la gorge périphérique interne ;
- les moyens de sollicitation axiale comportent des éléments de filetage complémentaires ménagés sur la bague de serrage et sur l'élément de tuyauterie ;
- les surfaces de came associées ménagées sur la bague de serrage et la garniture sont des surfaces tronconiques ;
- la bague de serrage comporte un perçage radial de réception d'une goupille de blocage de la bague de serrage par rapport à l'élément de tuyauterie tubulaire, lequel perçage est ménagé au travers de la bague de serrage pour déboucher le long d'une butée de blocage de la goupille ménagée à la surface de l'élément de tuyauterie, lorsque la bague de serrage est rapportée à l'extrémité de l'élément de tuyauterie et est sollicitée par les moyens de sollicitation axiale ; et
- il comporte une goupille initialement liée à ladite cale d'écartement.

Selon la revendication 12, l'invention concerne en outre un procédé de liaison d'un élément de tuyauterie tubulaire avec une conduite engagée dans l'élément de tuyauterie.

L'invention sera mieux comprise à la lecture de la description qui va suivre, donnée uniquement à titre d'exemple et faite en référence aux dessins sur lesquels :

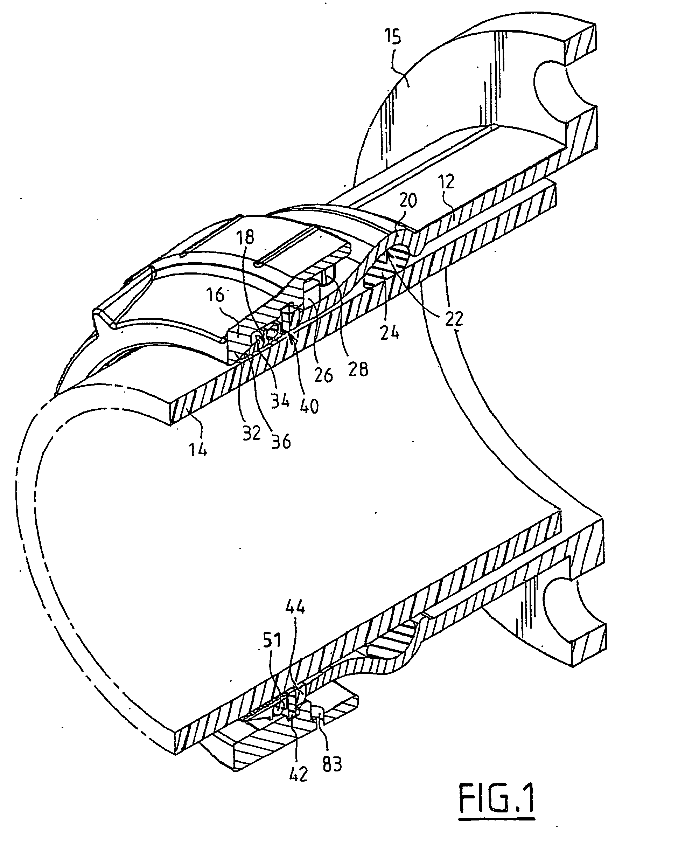

- la Figure 1 est une vue en perspective et en coupe longitudinale d'un raccord de liaison selon l'invention, alors que le verrouillage est effectué ;

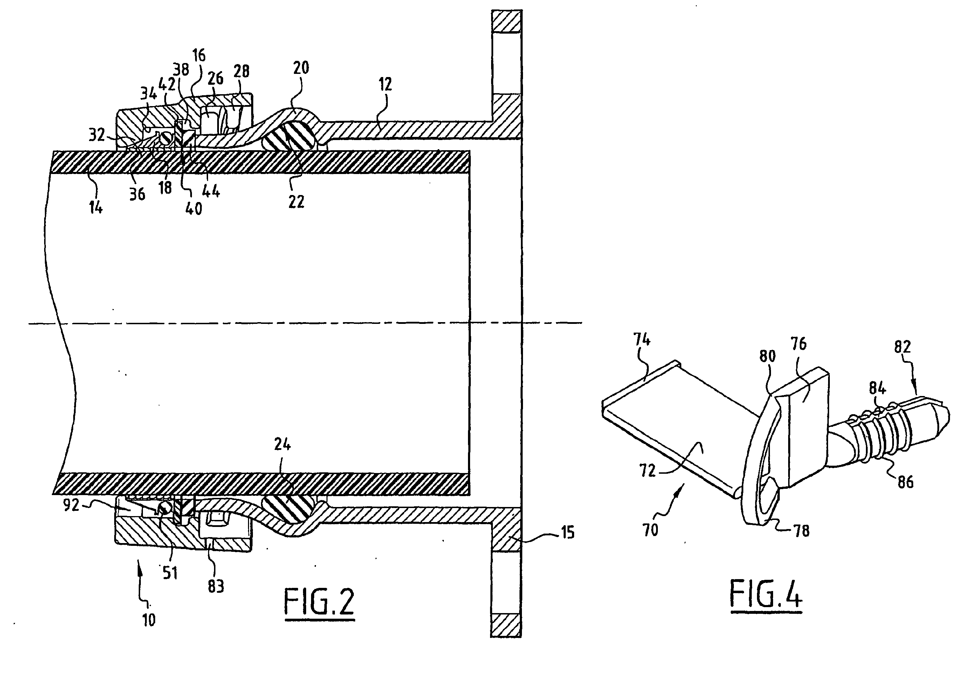

- la Figure 2 est une vue en coupe longitudinale du raccord de la Figure 1 dans le même état ;
- la Figure 3 est une vue en perspective à plus grande échelle de la garniture périphérique de verrouillage selon l'invention, celle-ci étant maintenue écartée ;
- la Figure 4 est une vue en perspective d'un accessoire du raccord de liaison suivant l'invention intégrant une cale et une goupille de verrouillage ;
- la Figure 5 est une vue analogue à celle de la Figure 2, avant établissement du verrouillage ; et
- la Figure 6 est une vue à plus grande échelle de la région de la figuré 5 comportant la cale d'écartement.

Le raccord 10 illustré aux Figures est adapté pour assurer la liaison d'un élément de tuyauterie tubulaire 12 et d'une conduite 14. Il est particulièrement approprié pour relier des éléments réalisés dans des matériaux différents, et notamment un élément de tuyauterie tubulaire réalisé en fonte, ou tout autre matériau métallique avec une conduite en matière plastique, telle que du poly(chlorure de vinyle), du polyéthylène ou du polypropylène ou tout autre matériau.

L'élément de tuyauterie 12 constitue par exemple un élément d'accouplement, permettant, à une extrémité, la liaison de la conduite 14 par l'intermédiaire du raccord selon l'invention, et présentant à son autre extrémité par exemple une bride 15 ou tout autre élément propre à assurer la liaison de l'élément d'accouplement avec une conduite réalisée dans le même matériau. Un accouplement à bride, de tout type connu, est alors mis en oeuvre entre l'élément de tuyauterie 12 et la conduite accolée.

L'élément de tuyauterie 12 est destiné à recevoir intérieurement l'extrémité de la conduite 14. Ainsi, il présente un diamètre intérieur supérieur au diamètre extérieur de la conduite 14. Cette conduite est engagée à l'intérieur de l'élément de tuyauterie depuis une extrémité libre de celui-ci.

La conduite 14 est constituée d'un tube de section circulaire présentant une surface latérale extérieure lisse dépourvue de tout profil en saillie ou en creux propre à assurer sa liaison. Ainsi, la conduite 14 présente, dans sa région de liaison à l'élément de tuyauterie tubulaire 12, un bout uni.

Le raccord selon l'invention comporte essentiellement une bague de serrage 16 rapportée à l'extrémité libre de l'élément de tuyauterie 12 et une garniture périphérique de verrouillage 18 entourant la conduite 14. Cette garniture de verrouillage étant sollicitée de manière centripète par la bague de serrage 16, lorsque celle-ci est sollicitée axialement vers l'élément de tuyauterie 12.

En arrière de son extrémité libre recevant la bague de serrage 16, la paroi latérale de l'élément de tuyauterie 12, présente une déformation périphérique extérieure 20 délimitant intérieurement une gorge périphérique 22 dans laquelle est reçue une garniture d'étanchéité 24 maintenue pressée contre la surface extérieure de la conduite 14. Cette garniture 24 assure l'étanchéité entre la conduite 14 et l'élément de tuyauterie 12.

Sur sa surface latérale extérieure, au voisinage de son extrémité libre, l'élément de tuyauterie 12 porte des ergots 26 permettant le vissage de la bague de serrage 16 à l'extrémité de l'élément de tuyauterie. Ces ergots 26, par exemple au nombre de quatre, sont adaptés pour coopérer avec quatre rampes hélicoidales 28 faisant saillie à la surface intérieure de la bague 16.

Les ergots 26 et les rampes 28 forment des moyens de vissage permettant, lors du vissage, une sollicitation axiale de la bague de serrage 16 vers l'élément de tuyauterie 12.

La bague de serrage 16 s'étend généralement autour de la conduite 14 au-delà de l'extrémité libre de l'élément de tuyauterie 12, ce dernier n'étant entouré que par le tronçon de la bague de serrage portant les rampes 28.

La bague de serrage 16 présente, sur son tronçon s'étendant au delà de l'élément de tuyauterie, un rebord rentrant 32 en arrière duquel est définie une chambre annulaire 34 de réception partielle de la garniture 18.

Une surface de came tronconique 36 est ménagée à l'extrémité du rebord rentrant 32. Cette surface de came 36 est tournée vers l'élément de tuyauterie 12. Ainsi, la circonférence de l'extrémité du rebord 32 a un diamètre augmentant progressivement en direction de l'élément de tuyauterie 12.

Cette surface de came 36 est adaptée pour coopérer avec une surface de came complémentaire ménagée sur la garniture 18 qui sera décrite en détail dans la suite.

Au voisinage de l'extrémité de l'élément de tuyauterie 12 mais au delà de celle-ci, la surface latérale délimitant la chambre 34 présente une gorge périphérique 38 permettant la réception de moyens élastiques 40 de sollicitation axiale de la garniture 18.

Ces moyens 40 sont formés d'une rondelle fendue au moins partiellement élastique. Cette rondelle présente une couronne de support fendue 42 réalisée en matière plastique rigide. Le bord périphérique extérieur de la couronne de support est reçu dans la gorge périphérique 38. La couronne de support 42 porte sur sa face tournée vers l'élément de tuyauterie 12, au voisinage.de son bord inférieur, un garnissage annulaire 44 réalisé en matériau élastique tel que de la mousse, ou du caoutchouc. Ce garnissage est adapté pour s'appliquer sur la tranche de l'élément de tuyauterie 12. Il s'étend suivant toute la circonférence de la couronne de support 42. La largeur de la gorge périphérique 38 est supérieure à l'épaisseur de la couronne de support 42, permettant ainsi un débattement axial de la rondelle au moins partiellement élastique.

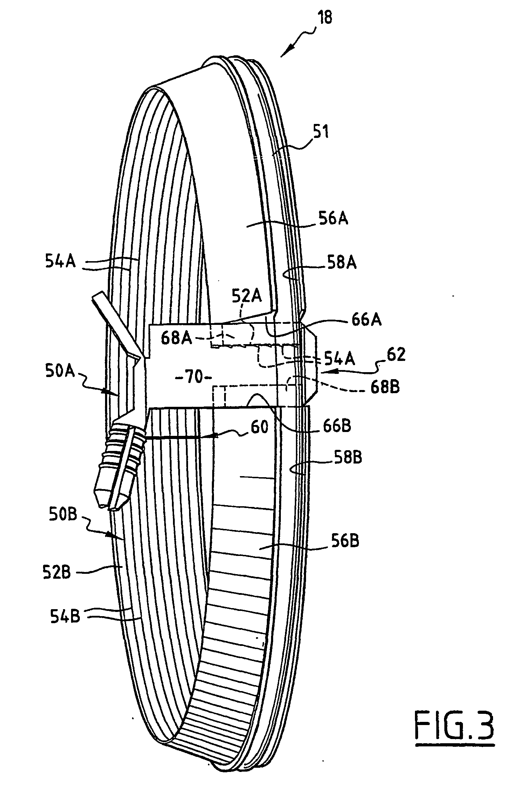

Comme illustré plus clairement sur la Figure 3, la garniture de verrouillage 18 comporte deux mors semi-cylindriques 50A à 50B associés l'un à l'autre pour former une couronne articulée. La garniture 18 comporte en outre un moyen de rappel constitué dans l'exemple considéré d'un bracelet élastique 51 ceinturant les deux mors 50A, 50B accouplés. En étant appliqué sur leur surface externe, ce bracelet 51 sollicite de manière centripète les deux mors.

Les mors 50A, 50B présentent une surface latérale intérieure semi-cylindrique 52A, 52B. Ces surfaces sont munies de nervures d'accrochage semi-cylindriques 54A, 54B s'étendant d'un bout à l'autre de chaque mors.

Sur sa surface latérale extérieure, chaque mors présente une surface de came 56A, 56B de forme générale tronconique dont l'inclinaison correspond à celle de la surface de came 36 ménagée sur le rebord 32 de la bague de serrage.

En arrière de surfaces de came 56A, 56B est ménagée suivant la longueur de chaque mors une gorge semi-cylindrique 58A, 58B s'ouvrant sur l'extérieur et à l'intérieur duquel est reçu le bracelet élastique 51. Ainsi, le bracelet 51 est confiné axialement à l'intérieur de ces gorges.

Des premières extrémités des mors sont appliquées en contact l'une contre l'autre suivant une ligne de contact 60 parallèle à l'axe. Ce contact s'effectue suivant la tranche des deux mors semi-cylindriques. Les deux mors s'articulent l'un par rapport à l'autre suivant cette ligne.

Les secondes extrémités de chaque mors délimitent entre elles un intervalle 62 dont la largeur varie en fonction de l'écartement des deux mors. Les secondes extrémités présentent extérieurement un décrochement définissant dans l'épaisseur des mors, des épaulements transversaux 66A, 66B disposés en regard et des surfaces d'appui cylindriques 68A, 68B disposées en avant de ces épaulements.

Ces surfaces d'appui sont propres à recevoir une cale d'écartement amovible 70 dont les bords latéraux viennent en appui sur les épaulements 66A, 66B afin de maintenir écartées les secondes extrémités des deux mors 50A, 50B à l'encontre de l'action du bracelet élastique 51. Ainsi la garniture 18 est maintenue avec un diamètre intérieur supérieur à son diamètre nominal défini lorsque les bords des deux mors sont en contact.

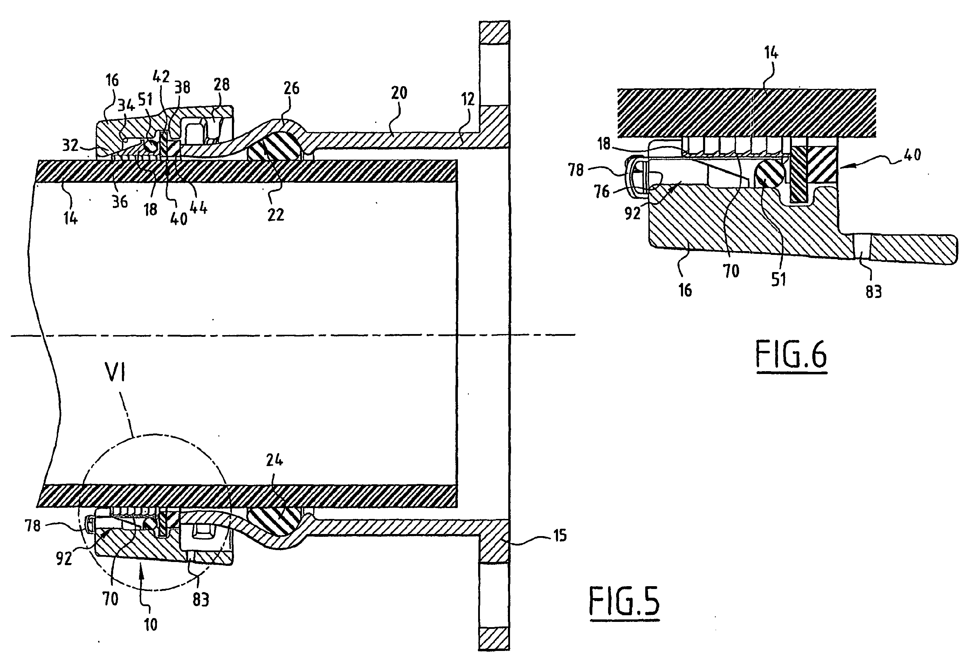

La cale d'écartement 70 est représentée à plus grande échelle sur la Figure 4. Elle est constituée d'une plaque rectangulaire 72 d'épaisseur réduite présentant deux bords latéraux parallèles adaptés pour venir s'appliquer sur les épaulements 66A, 66B. La distance séparant ces deux bords latéraux est supérieure à la somme des largeurs des surfaces d'appui 68A, 68B.

A une extrémité, la plaque 72 présente un rebord 74 formant une butée adaptée pour coopérer avec le bracelet élastique 51, cette butée formant un point dur lors du franchissement du bracelet élastique 52 par le rebord 74. A son autre extrémité, la plaque 72 est venue de matière avec un corps 76 solidaire d'une patte de traction articulée 78. Cette dernière, présente la forme d'un arceau. Elle s'articule sur le corps 76 dans une région d'épaisseur réduite 80 formant charnière.

En outre, le corps 76 est venu de matière avec une goupille 82 adaptée pour être engagée après serrage de la bague 16 dans un perçage radial 83 ménagé dans la bague 16 dans la région entourant l'élément de tuyauterie. Plus précisément, ce perçage est ménagé à proximité d'un ergot 26 lorsque la bague de serrage est vissée sur l'élément de tuyauterie après réalisation du verrouillage du raccord.

La goupille 82 présente une fente longitudinale 84 et des nervures périphériques 86. La goupille 82 est reliée au corps 76 à une extrémité de celle-ci.

Initialement, comme illustré sur la Figure 5, avant établissement de la liaison, la garniture 18 est confinée à l'intérieur de la chambre 34, la bague 16 étant desserrée mais engagée autour de l'élément de tuyauterie 12.

Dans cette position, chacun des mors de la garniture 18 est plaqué contre la surface de came 36 de la bague sous l'action de l'élasticité du garnissage 44 de la couronne 40.

La garniture de verrouillage 18 est maintenue écartée par la présence de la cale d'écartement 70 engagée dans l'intervalle 62 défini entre les deux extrémités usinées des mors.

Comme illustré sur la Figure 6, le bague 16 présente intérieurement sur sa périphérie une encoche 92 ménagée dans le rebord rentrant 32 à l'intérieur de laquelle s'étend la partie de la cale 70 prolongeant l'extrémité de la cale reçue entre les épaulements définis aux extrémités des deux mors.

Le corps 76 et la patte de traction 78 font saillie au-dehors de la chambre 34, et notamment au-delà de la bague de serrage 16.

Alors que les mors 50A, 50B sont écartés, on conçoit que l'engagement de la conduite 14 dans l'élément de tuyauterie 12 est aisé, puisque le franchissement de la garniture s'effectue sans difficulté, celle-ci ayant un diamètre intérieur supérieur au diamètre extérieur de la conduite 14.

Lorsque la conduite et l'élément de tuyauterie sont correctement positionnés axialement, la cale d'écartement 70 est retirée par traction depuis la patte 78. Ainsi, la cale s'échappe au travers de l'encoche 92.

Après retrait de la cale 70, les deux mors 50A, 50B se rapprochent automatiquement l'un de l'autre sous l'action du bracelet élastique 51. Ils enserrent alors entre eux la surface latérale extérieure de la conduite 14. Après rapprochement des deux mors, le positionnent axial à la conduite et de l'élément de tuyauterie est assuré.

Pour assurer un verrouillage correct du raccord, la bague de serrage 16 est alors vissée plus avant sur l'élément de tuyauterie 12 jusqu'à provoquer une misé en contact des surfaces de came complémentaires 36 et 56A, 56B. Lors de la poursuite du serrage, l'effort appliqué par la surface de came 36 sur les surfaces complémentaires 56A, 56B provoquent, sous l'action de la sollicitation axiale de la bague de serrage, une sollicitation centripète appliquée sur les deux mors, ce qui provoque un enfoncement partiel des nervures 54A, 54B dans la surface latérale externe de la conduite 14.

Lors du vissage de la bague 16, la couronne 40 prenant appui sur l'extrémité de l'élément de tuyauterie 12 sollicite axialement la garniture 18 vers la surface de came 36, garantissant ainsi une coopération satisfaisante des surfaces de came en contact.

On conçoit qu'après vissage de la bague 16, la garniture 18 étant retenue axialement par la bague 16 et cette garniture étant solidarisée autour de la conduite 14, un verrouillage axial est assuré entre l'élément de tuyauterie 12 et la conduite 14.

Enfin, pour éviter un dévissage accidentel de la bague de serrage 16, la goupille 82 est engagée dans le perçage 83. Ainsi, en cas de tentative de desserrage, la goupille 82 entre en contact avec un ergot 26 formant butée, interdisant ainsi la rotation de la bague de serrage.

On comprend qu'un raccord tel que décrit ici permet une liaison simple d'un élément de tuyauterie et d'un bout uni d'une conduite, et ce dans une position axiale quelconque des deux éléments l'un par rapport à l'autre. En effet, la garniture de verrouillage 18 ne vient s'appliquer sur la surface externe de la conduite 14 qu'après positionnement axial correct de celle-ci par rapport à l'élément de tuyauterie 12.

En variante, la bague de serrage 16 peut être dépourvue de filetage pour son vissage à l'extrémité de l'élément de tuyauterie. Elle comporte alors une bride extérieure disposée en regard d'une bride complémentaire associée à l'élément de tuyauterie. Des boulons engagés au travers des deux brides assurent alors la sollicitation axiale de la bague de serrage vers l'élément de tuyauterie.

## Revendications

1. Raccord (10) de liaison d'un élément de tuyauterie tubulaire (12) avec une conduite (14) engagée dans l'élément de tuyauterie (12), du type comportant ;
- une garniture périphérique (18) de verrouillage de la conduite (14), laquelle garniture (18) est adaptée pour ceinturer la conduite (14) et est élastiquement déformable radialement depuis un état de repos où elle présente un diamètre intérieur nominal,
- une bague externe de serrage (16) rapportée à l'extrémité de l'élément de tuyauterie (12) et entourant la garniture périphérique (15),et
- des moyens (26,28) de sollicitation axiale de la bague de serrage (16) vers l'élément de tuyauterie (12), les surfaces en regard de la bague de serrage (16) et da la garniture (18) présentant des surfaces de came (36, 56A, 56B) associées, adaptées pour assurer une compression centripète de la garniture (18) sur la conduite (14) lors d'une sollicitation axiale de la bague de serrage (16) vers l'élément de tuyauterie (12),
**caractérisé en ce qu'**il comporte des moyens (70) de maintien de la garniture écartée avec un diamètre intérieur supérieur à son diamètre nominal avant mise en place de la conduite (14), lesquels moyens de maintien (70) sont libérables alors que la conduite (14) est en place et **en ce qu'**il comporte, entre la garniture de verrouillage (18) et l'extrémité de l'élément de tuyauterie (12), des moyens élastiques (40) de sollicitation axiale de la garniture (18) à l'écart de l'extrémité de l'élément de tuyauterie (12), les moyens élastiques (40) sollicitant la garniture contre la surface de came (36) de la bague de serrage (16), au moins quand la bague (16) est desserrée mais engagée autour de l'élément de tuyauterie (12).

2. Raccord selon la revendication 1, **caractérisé en ce que** la garniture (18) présente au moins une interruption (62) suivant sa circonférence, et **en ce que** lesdits moyens de maintien comportent une cale d'écartement amovible (70) disposée initialement dans l'interruption (62), laquelle cale d'écartement (70) comporte un prolongement de préhension (78.) accessible depuis l'extérieur de la bague de serrage (16).

3. Raccord selon la revendication 2, **caractérisé en ce que** la garniture (18) comporte suivant sa circonférence au moins deux mors courbes et rigides (50A, 50B) et un moyen de rappel élastique (51) des deux mors sollicitant ceux-ci de manière centripète.

4. Raccord selon l'une quelconque .des revendications précédentes, **caractérisé en ce que** la bague de serrage (16) comporte sur sa surface intérieure une encoche (92) de passage du prolongement de préhension (78) de ladite cale (70).

5. Raccord selon l'une quelconque des revendications de 1 à 4 **caractérisé en ce que** les moyens élastiques de sollicitation. (40) comportent une rondelle (42, 44) au moins partiellement expansible axialement.

6. Raccord selon la revendication 5, **caractérisé en ce que** la bague de serrage (19) comporte une gorge intérieure (38)' de réception du bord extérieur de ladite rondelle (42, 44) au moins partiellement expansible axialement.

7. Raccord selon l'une quelconque des revendications précédentes, **caractérisé en ce que** l'élément de tuyauterie (12) comporte une gorge périphérique interne (22) et une garniture d'étanchéité (24) disposée dans la gorge périphérique interne (22).

8. Raccord selon l'une quelconque des revsneLications précédentes, **caractérisé en ce que** les moyens de sollicitation axiale comportent des éléments de filetage complémentaires (26, 28) ménagés sur la bague de serrage (16') et sur l'élément de tuyauterie (12).

9. Raccord selon l'une quelconque des revendications précédentes, **caractérisé en ce que** les surfaces de came associées (36, 56A, 55B) ménagées sur la bague de serrage (16) et la garniture (18) sont des surfaces tronconiques.

10. Raccord selon l'une quelconque des revendications précédentes, **caractérisé en ce que** la bague de serrage (16) comporte un perçage radial (83) de réception d'une goupille (82) de blocage de la bague de serrage par rapport à l'élément de tuyauterie tubulaire (12), lequel perçage (83) est ménagé au travers de la bague de serrage (16) pour déboucher le long d'une butée (26) de blocage de la goupille ménagée à la surface de l'élément de tuyauterie (12), lorsque la bague de serrage (16) est rapportée à l'extrémité de l'élément de tuyauterie (12) et est sollicitée par les moyens de sollicitation axiale (26, 28).

11. Raccord selon l'une quelconque des revendications précédentes, **caractérise en ce qu'**il comporte une goupille (82) liée à ladite cale d'écartement (70).

12. Procédé de liaison d'un élément de tuyauterie tubulaire (12) avec une conduite (14) engagée dans l'élément de tuyauterie (12), à l'aide d'un raccord (10) comportant :
- une garniture périphérique (18) de verrouillage de la conduite (14), laquelle garniture (18) est adaptée pour ceinturer la conduite (14) et est élastiquement déformable radialement depuis un état de repos où elle présente un diamètre intérieur nominal inférieur au diamètre extérieur de la conduite (14),
- une bague externe de serrage (16) rapportée à l'extrémité de l'élément de tuyauterie (12) et entourant la garniture périphérique (18),
- des moyens (26, 28) de sollicitation axiale de la bague de serrage (16) vers l'élément de tuyauterie (12), les surfaces en regard de la bague de serrage (16) et de la garniture (18) présentant des surfaces de came (36, 56A, 56B) associées, adaptées pour assurer une compression centripète de la garniture (18) sur la conduite (14) lors d'une sollicitation axiale de la bague de serrage (16) vers l'élément de tuyauterie (12),
**caractérisé en ce que** le raccord comporte entre la garniture de verrouillage (18) et l'extrémité de l'élément de tuyauterie (12)ₓ des moyens élastiques (40) de sollicitation axiale de la garniture (18) à l'écart de l'extrémité de l'élément de tuyauterie (12), les moyens élastiques (40) sollicitant la garniture (18) contre la surface de came (36) de la bague de serrage (16) au moins quand la bague (16) est desserrée mais engagée autour de l'élément de tuyauterie (12), le procédé comportant les étapes successives consistant à :
- maintenir ladite garniture écartée avec un diamètre supérieur au diamètre extérieur de la conduite (14), ladite garniture étant en place axialement dans le raccord (10),
- introduire la conduite (14) dans ladite garniture (18),
- libérer ladite garniture pour qu'elle se plaque par élasticité autour de la conduite (14), et
- solliciter axialement la bague de serrage (16) vers l'élément de tuyauterie (12).

## Claims

1. Connection (10) for connecting a tubular pipe element (12) to a conduit (14) located in the pipe element (12), of the type comprising:
- a peripheral locking fitting (18) for the conduit (14), said fitting (18) being adapted so as to encompass the conduit (14) and being elastically deformable in a radial direction from a state of rest in which it exhibits a nominal interior diameter,
- an external locking bushing (16) connected to the end of the pipe element (12) and surrounding the peripheral fitting (18), and
- means (26, 28) for axial loading of the locking bushing (16) to the pipe element (12), the surfaces facing the locking bushing (16) and the fitting (18) having associated cam surfaces (36, 56A, 56B) which are formed such as to ensure centripetal compression of the fitting (18) on the conduit (14) during axial loading of the locking bushing (16) to the pipe element (12),
**characterised in that** it comprises means (70) for keeping separated the fitting with an interior diameter greater than its nominal diameter before the placement of the conduit (14), said means (70) being releasable once the conduit (14) is in place, and **in that** it comprises, between the locking fitting (18) and the end of the pipe element (12), elastic means (40) for axial loading of the fitting (18) at a distance from the end of the pipe element (12), the elastic means (40) imposing loading on the fitting against the cam surface (36) of the locking bushing (16) at least when the bushing (16) is loosened but still engaged around the pipe element (12).

2. Connection according to Claim 1, **characterised in that** the fitting (18) exhibits at least one break (62) following its circumference, and **in that** said means comprise a movable spacer block (70), arranged initially in the break (62), said spacer block (70) comprising a gripping extension piece (78) accessible from the outside of the locking bushing (16).

3. Connection according to Claim 2, **characterised in that** the fitting (18) comprises, depending on its circumference, at least two curved and rigid jaws (50A, 50B) and means (51) for elastic loading of the two jaws, imposing loading on them in a centripetal manner.

4. Connection according to any one of the preceding claims, **characterised in that** the locking bushing (16) comprises on its interior surface a notch (92) for the passage of the gripping extension (78) of said block (70).

5. Connection according to any one of claims 1 to 4, **characterised in that** the elastic loading means (40) comprise a washer (42, 44) at least partially capable of axial expansion.

6. Connection according to Claim 5, **characterised in that** the locking bushing (16) comprises an internal throat (38) for accommodating the outer edge of said washer (42, 44) at least partially capable of axial expansion.

7. Connection according to any one of the preceding claims, **characterised in that** the pipe element (12) comprises an internal peripheral throat (22) and a sealing fitting (24) arranged in the internal peripheral throat (22).

8. Connection according to any one of the preceding claims, **characterised in that** the axial loading means comprise supplementary screw thread elements (26, 28) imposed on the locking bushing (16) and on the pipe element (12).

9. Connection according to any one of the preceding claims, **characterised in that** the associated cam surfaces (36, 56A, 56B) arranged on the locking bushing (16) and on the fitting (18) are surfaces in the shape of truncated cones.

10. Connection according to any one of the preceding claims, **characterised in that** the locking bushing (16) comprises a radial passage (83) for accommodating a pin (82) blocking the locking bushing in relation to the tubular pipe element (12), said passage (83) being arranged across the locking bushing (16) to emerge along a stop (26) blocking the pin arranged on the surface of the pipe element (12) when the locking bushing (16) is moved to the end of the pipe element (12) and is placed under loading by the axial loading means (26, 28).

11. Connection according to any one of the preceding claims, **characterised in that** it comprises a pin (82) connected to said spacer block (70).

12. Method for connecting a tubular pipe element (12) to a conduit (14) engaged in the pipe element (12) with the aid of a connection (10) comprising:
- a peripheral locking fitting (18) of the conduit (14), said fitting (18) being designed to encompass the conduit (14) and being elastically deformable radially from a state of rest in which it has a nominal internal diameter less than the external diameter of the conduit (14),
- an external locking bushing (16) attached to the end of the pipe element (12) and surrounding the peripheral fitting (18),
- means (26, 28) for axial loading of the locking bushing (16) to the pipe element (12), the surfaces facing the locking bushing (16) and the fitting (18) having associated cam surfaces (36, 56A, 56B), arranged so as to ensure centripetal compression of the fitting (18) on the conduit (14) under axial loading of the locking bushing (16) to the pipe element (12),
**characterised in that** the connection comprises, between the locking fitting (18) and the end of the pipe element (12), elastic means (40) for axial loading of the fitting (18) at a distance from the end of the pipe element (12), the elastic means (40) imposing loading on the fitting (18) against the cam surface (36) of the locking bushing (16), at least when the bushing (16) is loosened but still engaged around the pipe element (12), and **in that** it comprises the method comprising successive stages consisting of:
- keeping separated said fitting with a diameter greater than the external diameter of the conduit (14), said fitting being in place axially in the connection (10),
- introducing the conduit (14) into said fitting (18),
- releasing said fitting so that it engages in contact by elasticity around the conduit (14), and
- imposing axial loading on the locking bushing (16) against the pipe element (12).

## Patentansprüche

1. Anschlussstutzen (10) für ein rohrförmiges Rohrleitungselement (12) mit einer Leitung (14), die in das Rohrleitungselement (12) eingesteckt ist, von der Bauart, die Folgendes umfasst:
- einen Umfangsbeschlag (18) zum Festsetzen der Leitung (14), wobei der Beschlag (18) dazu ausgelegt ist, die Leitung (14) zu umgreifen und aus einem Ruhezustand, in dem er einen Innensolldurchmesser aufweist, radial elastisch verformbar ist,
- einen außenliegenden Spannring (16), der auf das Ende des Rohrleitungselements (12) aufgesetzt ist und den Umfangsbeschlag (18) umgibt, und
- Einrichtungen (26, 28), um den Spannring (16) axial zum Rohrleitungselement (12) hin zu drücken, wobei die dem Spannring (16) und dem Beschlag (18) zugewandten Flächen zugeordnete Nockenflächen (36, 56A, 56B) aufweisen, die dazu ausgelegt sind, bei einer axialen Druckbeaufschlagung des Spannrings (16) zum Rohrleitungselement (12) hin einen zur Mitte hin gerichteten Druck des Beschlags (18) auf die Leitung (14) sicherzustellen,
**dadurch gekennzeichnet, dass**
er Einrichtungen (70) umfasst, um den Beschlag vor dem Anbringen der Leitung (14) mit einem Innendurchmesser gespreizt zu halten, der größer ist als sein Solldurchmesser, wobei die Halteeinrichtungen (70) freisetzbar sind, wenn die Leitung (14) angebracht ist, und **dadurch**, dass er zwischen dem Festsetzungsbeschlag (18) und dem Ende des Rohrleitungselements (12) elastische Einrichtungen (40) umfasst, um den Beschlag (18) axial vom Ende des Rohrleitungselements (12) weg zu drücken, wobei die elastischen Einrichtungen (40) den Beschlag zumindest dann gegen die Nockenfläche (36) des Spannrings (16) drücken, wenn der Ring (16) gelockert ist aber um das Rohrleitungselement (12) herum angreift.

2. Stutzen nach Anspruch 1,
**dadurch gekennzeichnet, dass**
der Beschlag (18) mindestens eine Unterbrechung (62) entlang seines Umfangs aufweist, und dass die Halteeinrichtungen einen abnehmbaren Spreizkeil (70) umfassen, der anfänglich in der Unterbrechung (62) angeordnet ist, wobei dieser Spreizkeil (70) eine Greifverlängerung (78) umfasst, die von der Außenseite des Spannrings (16) her zugänglich ist.

3. Stutzen nach Anspruch 2,
**dadurch gekennzeichnet, dass**
der Beschlag (18) entlang seines Umfangs mindestens zwei gekrümmte und starre Spannbacken (50A, 50B) und eine elastische Rückstelleinrichtung (51) für die beiden Spannbacken umfasst, die diese mit einem zur Mitte hin gerichteten Druck beaufschlagen.

4. Stutzen nach einem der vorhergehenden Ansprüche,
**dadurch gekennzeichnet, dass**
der Spannring (16) an seiner Innenfläche eine Aussparung (92) zum Durchgang der Greifverlängerung (78) des Spreizkeils (70) umfasst.

5. Stutzen nach einem der Ansprüche 1 bis 4,
**dadurch gekennzeichnet, dass**
die elastischen Druckbeaufschlagungseinrichtungen (40) eine zumindest teilweise axial dehnbare Unterlegscheibe (42, 44) umfassen.

6. Stutzen nach Anspruch 5,
**dadurch gekennzeichnet, dass**
der Spannring (16) eine Innenkehle (38) zur Aufnahme des Außenrands der zumindest teilweise axial dehnbaren Unterlegscheibe (42, 44) umfasst.

7. Stutzen nach einem der vorhergehenden Ansprüche,
**dadurch gekennzeichnet, dass**
das Rohrleitungselement (12) eine umlaufende Innenkehle (22) und eine Dichtung (24) umfasst, die in der umlaufenden Innenkehle (22) angeordnet ist.

8. Stutzen nach einem der vorhergehenden Ansprüche,
**dadurch gekennzeichnet, dass**
die Einrichtungen zur axialen Druckbeaufschlagung komplementäre Gewindeelemente (26, 28) umfassen, die am Spannring (16) und am Rohrleitungselement (12) ausgebildet sind.

9. Stutzen nach einem der vorhergehenden Ansprüche,
**dadurch gekennzeichnet, dass**
die zugeordneten Nockenflächen (36, 56A, 56B), die am Spannring (16) und am Beschlag (18) ausgebildet sind, kegelstumpfartige Flächen sind.

10. Stutzen nach einem der vorhergehenden Ansprüche,
**dadurch gekennzeichnet, dass**
der Spannring (16) eine radiale Bohrung (83) zur Aufnahme eines Stifts (82) zum Arretieren des Spannrings in Bezug auf das Rohrleitungselement (12) umfasst, wobei die Bohrung (83) quer durch den Spannring (16) ausgebildet ist, um entlang eines an der Oberfläche des Rohrleitungselements (12) ausgebildeten Arretierungsanschlags (26) für den Stift zu münden, wenn der Spannring (16) am Ende des Rohrleitungseletnents (12) angesetzt und durch die Einrichtungen (26, 28) zur axialen Druckbeaufschlagung mit Druck beaufschlagt wird.

11. Stutzen nach einem der vorhergehenden Ansprüche,
**dadurch gekennzeichnet, dass**
er einen Stift (82) umfasst, der mit dem Spreizkeil (70) verbunden ist.

12. Verfahren zum Verbinden eines rohrförmigen Rohrleitungselements (12) mittels eines Stutzens (10) mit einer Leitung (14), die in das Rohrleitungselement (12) eingesteckt ist, Folgendes umfassend:
- einen Umfangsbeschlag (18) zum Festsetzen der Leitung (14), wobei der Beschlag (18) dazu ausgelegt ist, die Leitung (14) zu umgreifen und aus einem Ruhezustand, in dem er einen Innensolldurchmesser aufweist, der kleiner ist als der Außendurchmesser der Leitung (14), radial elastisch verformbar ist,
- einen außenliegenden Spannring (16), der auf das Ende des Rohrleitungselements (12) aufgesetzt ist und den Umfangsbeschlag (18) umgibt,
- Einrichtungen (26, 28), um den Spannring (16) axial zum Rohrleitungselement (12) hin zu drücken, wobei die dem Spannring (16) und dem Beschlag (18) zugewandten Flächen zugeordnete Nockenflächen (36, 56A, 56B) aufweisen, die dazu ausgelegt sind, bei einer axialen Druckbeaufschlagung des Spannrings (16) zum Rohrleitungselement (12) hin einen zur Mitte hin gerichteten Druck des Beschlags (18) auf die Leitung (14) sicherzustellen,
**dadurch gekennzeichnet, dass**
der Stutzen zwischen dem Festsetzungsbeschlag (18) und dem Ende des Rohrleitungselements (12) elastische Einrichtungen (40) umfasst, um den Beschlag (18) axial vom Ende des Rohrleitungselements (12) weg zu drücken, wobei die elastischen Einrichtungen (40) den Beschlag (18) zumindest darin gegen die Nockenfläche (36) des Spannrings (16) drücken, wenn der Ring (16) gelockert ist, aber um das Rohrleitungselement (12) herum angreift,
wobei das Verfahren die aufeinanderfolgenden Schritte umfasst, die darin bestehen:
- den Beschlag mit einem Durchmesser gespreizt zu halten, der größer ist als der Außendurchmesser der Leitung (14), wobei der Beschlag axial im Stutzen (10) eingesetzt ist,
- die Leitung (14) in den Beschlag (18) einzuführen,
- den Beschlag freizusetzen, damit er sich durch Elastizität um die Leitung (14) herum anlegt, und
- den Spannring (16) axial zum Rohrleitungselement (12) hin zu drücken.
